# EUROPEAN PATENT SPECIFICATION

(11) **EP 3 382 315 B1**
(45) Date of publication and mention of the grant of the patent: **20.11.2019**
(21) Application number: 17382168.7
(22) Date of filing: 31.03.2017
(51) Int. Cl.: D06F 58/24, F28F 3/04, F28F 19/00, F28F 13/18, B82Y 40/00, F28F 1/12

(54) **LAUNDRY DRYING APPLIANCE COMPRISING AT LEAST ONE FINNED-TUBE HEAT EXCHANGER**
WÄSCHETROCKNUNGSVORRICHTUNG MIT MINDESTENS EINEM RIPPENROHR-WÄRMETAUSCHER
SÈCHE-LINGE COMPRENANT AU MOINS UN ÉCHANGEUR DE CHALEUR À TUBES ET AILETTES

(43) Date of publication of application: 03.10.2018
(73) Proprietor: BSH Hausgeräte GmbH, 81739 München (DE); BSH Electrodomésticos España, S.A., 50016 Zaragoza (ES)
(72) Inventor: Artal Lahoz, Maria Carmen, 50007 Zaragoza (ES); Capablo Sese, Joaquin Jesus, 50003 Zaragoza (ES); Escartin Barduzal, Andres, 50009 Zaragoza (ES); Martinez Solanas, Elena, 50015 Zaragoza (ES); Otero Garcia, Iñaki, 31610 Villaba (ES); San Martin Sancho, Roberto, 31200 Estella (ES); Urrutia Angos, David, 50009 Zaragoza (ES)

(56) References cited:
- WO-A1-2016/166473
- DE-A1-102011 086 414
- US-A1- 2002 148 269
- US-A1- 2008 145 631
- US-A1- 2013 125 992
- US-A1- 2014 202 677
- US-B2- 6 925 711
- DATABASE WPI Section Ch, Week 201576 Thomson Scientific, London, GB; Class M13, AN 2015-68047Y XP002774612, -& JP 2015 193922 A (MITSUBISHI JUKOGYO KK) 5 November 2015 (2015-11-05)
- DATABASE WPI Section PQ, Week 201273 Thomson Scientific, London, GB; Class P56, AN 2011-F25945 XP002774613, -& CN 102 003 905 B (LIAOCHENG TIANYI IND PROD DESIGN CO LTD) 4 July 2012 (2012-07-04)

## Description

The invention relates to a laundry drying appliance comprising at least one fin having a treated surface. The invention further relates to a method for treating a surface of a metal fin of a finned-tube heat exchanger of a laundry drying appliance. The invention is particularly useful for laundry dryers comprising a heat pump. Laundry drying appliances often use heat exchangers to cool down and/or heat up process air flowing in a process air channel. The heat exchangers have heat exchange surfaces that are exposed to the process air coming from a laundry compartment, e.g. a drum. This process air typically contains moisture, fluff, hair etc. In particular if the heat exchanger is used to cool down the process air its content may settle on the heat exchange surface. While moisture will condensate and mostly drops down into a condensate tub or container, some condensate may remain on the heat exchange surface and reduce the effectiveness of the heat exchange. Also, fluff and hair may stick to the heat exchange surface, further reducing the effectiveness.

To keep the heat exchange effectiveness on a high level it is known to clean the heat exchange surface by directing a jet or spray of water onto the surface. However, some fluff, hair etc. may remain on the surface. Also, such a cleaning device may be costly and require a large internal space.

It is also known to treat the heat exchange surface by applying a non-stick coating to improve its cleanability. Applying such a coating has the disadvantage that it is costly and that the coating itself may reduce the heat exchange effectiveness.

DE 10 2011 086 414 A1 discloses a laundry treatment machine comprising a heat exchanger having corrugated aluminium plates. The surfaces in contact with the process air are provided with a water and particle-repellent surface layer in the form of an anodic coating.

Laundry drying appliances using a heat pump are generally known. For example, EP 1 964 965 A1 discloses a household appliance comprising a drying chamber for drying wet articles therein, a process air loop for circulating process air to dry the articles and a heat pump. Said heat pump comprises a pumping loop containing a pumping fluid to be circulated through said pumping loop, an evaporator heat exchanger for transferring heat from the process air into said pumping fluid by evaporating said pumping fluid, a liquefier heat exchanger for transferring heat from said pumping fluid to the process air by liquefying said pumping fluid, a compressor for compressing the pumping fluid and driving the pumping fluid through said pumping loop, and a nozzle for decompressing said pumping fluid.

As another example, EP 2 253 757 A1 discloses a household appliance having a housing and comprising within said housing a control unit, a drying chamber for containing articles to be dried, a closed-loop process air channel having a first blower operable by said control unit for conveying process air along the articles to effect drying, a heat pump unit operable by said control unit for extracting humidity from the process air, a condensate collector for collecting condensate thus formed by the heat pump unit and means for cooling at least one component of said heat pump unit including a second blower operable by said control unit, said means for cooling including an open-loop cooling channel having said second blower for conveying cooling air from outside said housing to said at least one component. Further, said cooling channel comprises a guide including said second blower, said guide connecting an inlet in said housing to said at least one component for cooling. The housing has a multiplicity of outlets allowing cooling air to flow out of said housing.

WO 2013/144875 A1 discloses a heat exchanger that comprises at least one set of pipes, each set of pipes comprising at least two pipes, wherein the pipes are mechanically connected by at least one connection structure. At least two pipes are made from different metals having a different thermal expansion coefficient; at least two of the pipes having a different thermal expansion coefficient are joined by a soldered joint or by a brazed joint. At the joint of the two pipes, the pipe made of the metal having a lower thermal expansion coefficient is inserted into the pipe made of the metal having a higher thermal expansion coefficient. The invention also relates to a household appliance, in particular laundry treatment appliance, comprising at least one such heat exchanger, and a method for manufacturing such heat exchanger.

WO 2015/068092 A1 discloses a heat pump that is designed for a household appliance, in particular laundry treatment appliance, and comprises a rotary compressor, a condenser, a restrictor, and an evaporator, wherein the condenser is of an expanded tube-and-fin type with the tubes having an outer diameter of less than 7 mm and wherein the roller has a height-to-radius ratio of 1.4 to 1.2. A household appliance, in particular a laundry treatment appliance, comprises such heat pump.

US 2009/0046362 A1 discloses an apparatus and methods for a nano-patterning process to fabricate nanostructures. A roller type mould is used to continuously imprint nanostructures onto a flexible web or a rigid substrate. The process includes a coating and an imprinting module, which rotate the web synchronously. Liquid resist materials are used for imprinting and the patterns are set by thermal or UV curing. The process is used to produce bilayer metal wire-grid polarizers, organic solar cells, and organic light emitting diodes.

US 2009/0162623 A1 discloses a process for structuring a surface, that is to say for forming at least one array of features with a submillimetre-scale lateral characteristic dimension on a plane surface of a product comprising a rigid glass element and at least one layer attached to said glass element, the structuring being carried out on said layer and a surface structuring, by plastic or visco-plastic deformation, being carried out by contact with a structured element called a mask with application of pressure, the structuring taking place by a continuous movement, parallel to the surface, of the product and by a movement of the mask about an axis parallel to the plane of the surface of the product. US 2009/0162623 A1 also relates to a glass product having a structured surface and to its uses.

It is the **object** of the present invention to at least partially overcome the problems associated with the prior art. It is a particular object of the present invention to provide a laundry drying appliance having a surface with improved functional characteristics wherein the surface has been improved in a particularly cost-effective and environmentally friendly manner.

The object is achieved according to the features of the independent claims. Advantageous and facultative embodiments can be found, e.g., in the dependent claims, in the subsequent description, and in the attached drawing.

The object is achieved by a laundry drying appliance comprising at least one finned-tube heat exchanger with at least one metal fin, the at least one fin having a treated surface, wherein the treated surface comprises a directly mechanically formed submillimetre-scale structure.

This laundry drying appliance gives the advantage that the surface, by virtue of the submillimetre-scale structure, may exhibit improved functional characteristics (e.g. hydrophobic or oleophobic properties) in a particularly cost-effective manner. For example, the forming can be accomplished as a one-step process. There is no need for applying a coating or for curing to achieve the desired properties, as e.g. needed by thermal or UV roll-to-roll forming. This, in turn, saves material, reduces a manufacturing complexity, saves energy, and achieves a higher durability and a higher chemical resistance. Therefore, a better environmental friendliness is also achieved.

The laundry drying appliance may be a dryer or a washing/drying combination ("washer-dryer"). The laundry drying appliance comprises at least one heat exchanger. It is an embodiment that the laundry drying appliance comprises a process air channel within which the at least one heat exchanger is positioned. Advantageously, at least two heat exchangers are positioned in the process air channel.

The process air channel may be part of a closed loop ("process air circuit") and may connect a process air outlet of a laundry compartment to a process air inlet of the laundry compartment. The laundry compartment may be a rotatable drum, in particular a horizontally rotatable drum. Alternatively, the process air channel is an open channel.

In case of at least two heat exchangers, these may comprise a first heat exchanger positioned nearer to the laundry compartment regarding a flow direction of the process air coming from the laundry compartment than a second heat exchanger. Thus, process air coming from the laundry compartment first reaches the first heat exchanger and then the second heat exchanger. The first heat exchanger may be used to cool warm and moist process air. By cooling the process air, condensate may form at a heat exchanging surface of the first heat exchanger. Fluff and hair carried along by the process air tend to stick at the wet heat exchanging surface. Having passed through the first heat exchanger, the process air is significantly cooler and cleaner. The process air then passes through the second heat exchanger where it is heated. After the second heat exchanger, the process air may re-enter the laundry compartment.

It is an embodiment that the heat exchangers are components of a heat pump. In particular, the first heat exchanger may be an evaporator of the heat pump while the second heat exchanger may be a condenser of the heat pump.

The at least one fin having a treated surface may have a surface exposed to process air.

That the treated surface is a mechanically formed surface in particular includes that the surface has been permanently (e.g. plastically or visco-plastically) deformed by mechanical means or loads to create the respective submillimetre-scale structure.

That the treated surface is a directly mechanically formed surface in particularly comprises that the tool for (de)forming the surface directly interacts with the surface, e.g. presses onto the surface in direct contact. The use of intermediate coatings etc. can thus be avoided.

According to the invention, the submillimetre-scale structure comprises a nanoscale structure within a microscale structure.

Regarding the microscale structure, the surface comprises at least one local microscale object having at least one lateral dimension (e.g. a length) of at least 1 micrometre but less than 1000 micrometres, in particular at least 1 micrometre but less than 100 micrometres, in particular at least 1 micrometre but less than 50 micrometres.

It is an embodiment that also the other lateral dimension (e.g. a width) is of a size of at least 1 micrometre but less than 1000 micrometres, in particular at least 1 micrometre but less than 100 micrometres, in particular at least 1 micrometre but less than 50 micrometres.

It is an embodiment that a depth of a microscale object is of a size of at least 1 micrometre but less than 1000 micrometres, in particular at least 1 micrometre but less than 100 micrometres, in particular at least 1 micrometre but less than 50 micrometres.

It is an embodiment that a spacing between neighbouring microscale objects is at least 1 micrometre but less than 1000 micrometres, in particular at least 1 micrometre but less than 100 micrometres, in particular at least 1 micrometre but less than 50 micrometres.

Regarding the nanoscale structure, the surface comprises at least one local nanoscale object having at least one lateral dimension (e.g. a length) of at least 1 nanometre but less than 1000 nanometres, in particular at least 1 nanometre but less than 100 nanometres, in particular at least 1 nanometre but less than 50 nanometres.

It is an embodiment that also the other lateral dimension (e.g. a width) is of a size of at least 1 nanometre but less than 1000 nanometres, in particular at least 1 nanometre but less than 100 nanometres, in particular at least 1 nanometre but less than 50 nanometres.

It is an embodiment that a depth of a nanoscale object is of a size of at least 1 nanometre but less than 1000 nanometres, in particular at least 1 nanometre but less than 100 nanometres, in particular at least 1 nanometre but less than 50 nanometres.

It is an embodiment that a spacing between neighbouring nanoscale objects is at least 1 nanometre but less than 1000 nanometres, in particular at least 1 nanometre but less than 100 nanometres, in particular at least 1 nanometre but less than 50 nanometres.

The metal surface comprises a nanoscale structure within a microscale structure. This gives the advantage that a particularly high degree of functionality can be achieved in a small area. For example, a microscale object may be a recess or indentation, and a bottom of this indentation comprises one or more formed nanoscale objects. In another example, a microscale object may be a protrusion, and a top of this protrusion comprises one or more formed nanoscale objects.

A microscale or nanoscale object may be an indentation or protrusion formed like a ring, cylinder, box, pyramid, conus, line, wedge etc. Generally, the form of a microscale or nanoscale object is not restricted.

According to the invention, the submillimetre-scale structure is a roll-to-roll-imprinted structure which is imprinted by using heated rolls.

The use of a roll-to-roll imprinting process gives the advantage that is particularly easy to implement and inexpensive to operate. Also, maintenance costs are low. Furthermore, roll-to-roll imprinting enables continuously imprinting of an endless workpiece, e.g. a coil.

The laundry drying appliance comprises at least one finned-tube heat exchanger wherein the directly mechanically formed submillimetre-scale structured metal surface is a surface of at least one fin of the finned-tube heat exchanger. This gives the advantage that the heat exchange surface may be embodied such that it is less susceptible to attachment of fluff and hair. This, in turn, enables a higher heat exchange effectiveness and/or less need to clean the surface. Therefore, a smaller cleaning device may be used or even avoided altogether. To this effect, the heat exchange surface may comprise a submillimetre-scale structure that reduces adhesion of fluff and hair (non-stick surface). Alternatively or additionally, the submillimetre-scale structure may exhibit a hydrophobic and/or oleophobic function.

The heat exchange surface is a surface of at least one fin of the finned-tube heat exchanger. This is particularly advantageous because the fins are more heavily covered by fluff, hair etc. than other parts of a heat exchanger. Also, a distance between neighbouring fins may be small so that a non-stick quality of the fins is of particular importance.

The object is also achieved by a method for treating a metal surface of a metal fin of a finned-tube heat exchanger of a laundry drying appliance wherein the surface is treated by directly mechanically forming a submillimetre-scale structure on the metal surface, wherein the submillimetre-scale structure comprises a nanoscale structure within a microscale structure on the metal surface. The method can be embodied in analogy to the above described laundry drying appliance and gives the same advantages.

Forming the submillimetre-scale structure comprises directly imprinting the submillimetre-scale structure onto the surface by mechanical means.

According to the invention, the imprinting is a roll-to-roll imprinting using heated rolls. The roll-to-roll imprinting may employ two parallel ("imprinting") rolls being placed next to each other or even the rolls may be placed staggered or not faced. A metal workpiece may be fed between or be passed through the rolls such that the rolls roll over a respective surface of the metal workpiece. The workpiece is under pressure from the rolls, thus imprinting the surface. A contact surface of at least one of the rolls comprises an imprinting structure ("imprinting pattern") that is the negative image of the submillimetre-scale structure to be created on the metal surface of a workpiece. If, for example, an indentation is to be created in the surface, the roll may comprise a fitting protrusion, and vice versa.

One or both imprinting rolls may comprise an imprinting pattern. If the workpiece is to be imprinted on both sides, it may be passed once through the rolls if both rolls comprise an imprinting pattern or twice through the rolls if only one of the rolls comprises an imprinting pattern.

In an embodiment, the pressure exerted on the rolls or by the rolls onto the workpiece may be up to 5000 MPa.

To protect the imprinting pattern against wear and damage, the rolls may have an additional hard coating, e.g. a diamond coating or a coating of boron nitride, boron carbide etc.

The roll-to-roll imprinting is performed using heated rolls. This gives the advantage that the metal is easier to deform plastically or visco-plastically. This is particularly advantageous for small structures or objects since the elastic portion of the generally elastic-plastic deformation behaviour of metals can be particular high for such small deformations. The heated rolls reduce the elastic response of the metal.

It is an embodiment that the temperature applied to or by the rolls is up to 1000 °C.

It is an embodiment that the roll-to-roll-forming is performed using at least one roll having a submillimetre-patterned jacket cover. Such a jacket cover can be slipped onto a roll and provide the rolling / deformation structure. This gives the advantage that different imprinting patterns can be used with one set of rolls which simplifies handling. The jacket cover can also be called a slip-on cover.

It is an embodiment that a metal sheet is directly mechanically formed - in particular imprinted - and then separated. This simplifies manufacturing, in particular if multiple separated pieces are to be manufactured. For example, a coil of sheet metal may be fed through a roll-to-roll imprinting apparatus and then be separated into several pieces, e.g. by punching, cutting (e.g. laser cutting) etc.

The metal of the metal component may be steel, aluminium, copper, etc., or an alloy thereof. In particular, the metal may be aluminium alloy 8011 according to DIN 573. The metal component may have an oxidation or oxidised layer.

The metal sheet is separated into fins of a finned-tube heat exchanger. Since the fins are sheet-like pieces they lend themselves to be manufactured by roll-to-roll imprinting. Also, the fins act as heat exchange surfaces of the heat exchanger and are thus particularly susceptible to be covered by condensate, fluff, hair etc. The submillimetre-scale structure may help to keep the fins clean by being embodied as a non-stick and/or hydrophobic and/or oleophobic structure.

The fins may be made of an aluminium alloy, in particular aluminium alloy 8011.

A thickness of the fins may be in the range between 0.10 and 0.20 mm, in particular between 0.12 and 0.15 mm.

The above described features and advantages of the invention as well as their kind of implementation will now be schematically described in more detail by several embodiment in the context of one or more figures.
- Fig.1: shows an oblique view onto a submillimetre-scale imprinting apparatus according to a first embodiment during an imprinting process;
- Fig.2: shows an oblique view onto a submillimetre-scale imprinting apparatus according to a second embodiment during an imprinting process;
- Fig.3: shows steps of a process to manufacture a laundry drying appliance; and
- Fig.4: shows a greatly simplified cross-sectional side view of a laundry drying appliance.

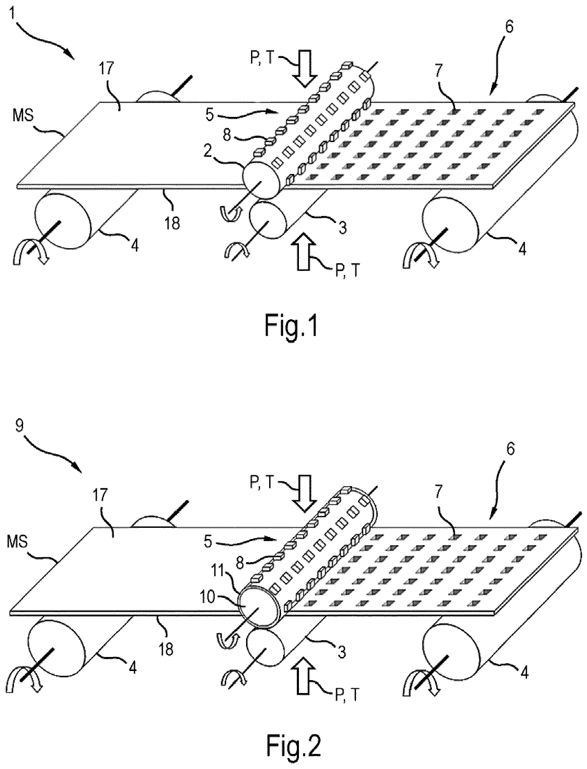

Fig.1 shows a submillimetre-scale roll-to-roll imprinting apparatus 1 that comprises a first imprinting roll 2, a second imprinting roll 3 and two feed rollers 4. A metal sheet MS is fed through between the imprinting rolls 2 and 3 by rotating the imprinting rolls 2 and 3 and eventually the feed rollers 4 as shown by the curved arrows. The metal sheet MS may be a coil made of aluminium alloy having a thickness between 0.12 mm and 0.15 mm. At least one of the imprinting rolls 2 and 3 may be pressed onto the metal sheet MS exerting a pressure of e.g. up to 5000 MPa. To facilitate a plastic deformation of the surfaces 17, 18 of the metal sheet MS, at least one of the imprinting rolls 2 and 3 may be heated, e.g. up to a temperature of 1000 °C.

Of the imprinting rolls 2 and 3, only the imprinting roll 2 has an imprinting pattern 5. Thus, the metal sheet MS is only imprinted on one surface 17 with a submillimetre-scale surface structure 6. To imprint the other surface 18, the metal sheet MS must be fed through the imprinting rolls 2, 3 twice.

The imprinting pattern 5 is a pattern designed to create a submillimetre-scale surface structure 6 in particular having submillimetre-scale indentations 7 arranged in a repetitive pattern, in particular arranged in form of a matrix. For example, submillimetre-scale protrusions 8 of the imprinting pattern 5 may be positioned in multiple similar, parallel lines on the imprinting roll 2 with neighbouring lines having the same distance from another.

During imprinting the metal sheet MS does not have an intermediate coating but is directly mechanically imprinted by direct contact of the protrusions 8 with the surface 17 of the metal sheet MS. The surface of the rolls 2, 3 may be hardened, e.g. by having a hard coating etc.

Micrometre scaled protrusions may have a length, a width, and a depth each larger than 1 micrometre but smaller than 50 micrometres. A spacing of neighbouring parallel lines of protrusions 8 is between 1 and 50 micrometres. Also, spacing of neighbouring protrusions 8 of one line is between 1 and 50 micrometres Accordingly, a length, a width, and a depth of the indentations 7 created by the protrusions 8 is larger than 1 micrometre but is smaller than 50 micrometres. A spacing of vertical and horizontal lines of the matrix is also between 1 and 50 micrometres.

Nanometre scaled protrusions may have a length, a width, and a depth each larger than 1 nanometre but smaller than 50 nanometres. A spacing of neighbouring parallel lines of protrusions 8 is between 1 and 50 nanometres. Also, spacing of neighbouring protrusions 8 of one line is between 1 and 50 nanometres Accordingly, a length, a width, and a depth of the indentations 7 created by the protrusions 8 is larger than 1 nanometre but smaller than 50 nanometres. A spacing of vertical and horizontal lines of the matrix is also between 1 and 50 nanometres.

The imprinting pattern 5 comprises a mixture of micrometre scale objects and nanometre scale protrusions. For example, the imprinting pattern 5 may comprise micrometre scaled protrusions 8. Faces of these protrusions 8 have a nanoscale pattern. This results in a nanoscale structure within a microscale structure.

**Fig.2** shows an oblique view onto a submillimetre-scale imprinting apparatus 9 during an imprinting process. The imprinting apparatus 9 differs from the imprinting apparatus 1 in that the first imprinting roll 10 has a removable submillimetre-patterned jacket cover 11. The jacket cover 11 comprises the imprinting pattern 5. This gives the advantage that the imprinting pattern 5 can simply be varied by changing the jacket cover 11.

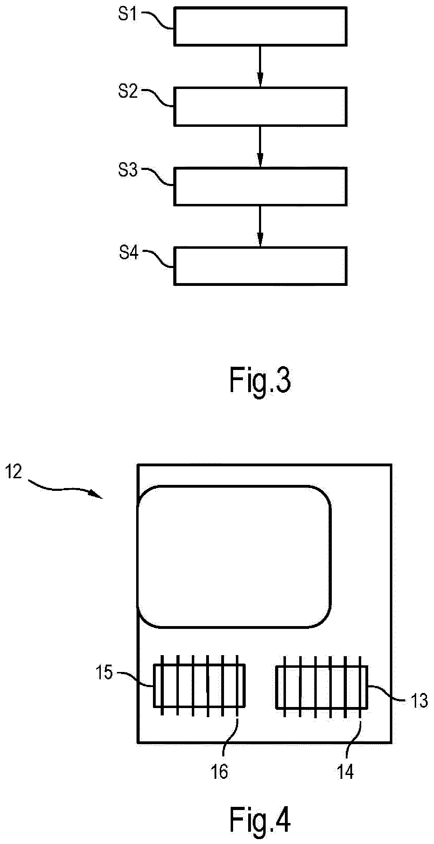

**Fig.3** shows steps of a process to manufacture household appliance in form of a laundry dryer 12 as shown in **Fig.4****.**

In a first step S1, the metal sheet MS is fed through the submillimetre-scale imprinting apparatus 1 or 9. By doing so, at least one of the surfaces 17, 18 of the metal sheet MS is provided with the submillimetre-scale surface structure 6 by directly mechanically imprinting the surface 17, 18 of the metal sheet MS.

In a second step S2, the metal sheet MS is separated, e.g. by stamping, cutting (e.g. laser cutting) etc. to create single workpieces.

In a third step S3, a finned-tube heat exchanger 13 is assembled using multiple imprinted workpieces of step S2 as fins 14. The heat exchange surface of the heat exchanger 13 comprises the surface 17, 18 of the fins 14 having the submillimetre-scale surface structure 6.

In a fourth step S4, a household appliance in form of a laundry dryer 12 is assembled using the finned-tube heat exchanger 13 of step S3. This heat exchanger 13 may be an evaporator of a heat pump of the laundry dryer 12. The other heat exchanger 15 is a condenser of the heat pump. The heat exchanger 15 is a finned-tube heat exchanger. Its fins 16 comprises a submillimetre-scale surface structure. Steps S2 to S4 may also be regarded as step for manufacturing a laundry drying appliance.

Of course, the invention is not restricted to the described embodiments.

For example, both imprinting rolls 2 and 3 may have an imprinting pattern. The imprinting patterns may be the same or may be different. This embodiment gives the advantage that a metal sheet MS can be structured on both sides in one step.

### LIST OF REFERENCE NUMERALS

- 1: submillimetre-scale roll-to-roll imprinting apparatus
- 2: first imprinting roll
- 3: second imprinting roll
- 4: feed roller
- 5: imprinting pattern
- 6: submillimetre-scale surface structure
- 7: indentation
- 8: protrusion
- 9: submillimetre-scale roll-to-roll imprinting apparatus
- 10: first imprinting roll
- 11: jacket cover
- 12: laundry dryer
- 13: finned-tube heat exchanger
- 14: fin
- 15: finned-tube heat exchanger
- 16: fin
- 17: surface of the metal sheet
- 18: surface of the metal sheet
- MS: metal sheet
- S1: first process step
- S2: second process step
- S3: third process step
- S4: fourth process step

## Claims

1. A laundry drying appliance (12) comprising at least one finned-tube heat exchanger (13, 15) with at least one metal fin (14, 16), **characterized in that** the at least one fin (14, 16) has a treated surface (17, 18) which comprises a directly mechanically formed submillimetre-scale structure (6), the submillimetre-scale structure (6) comprising a nanoscale structure within a microscale structure, wherein the submillimetre-scale structure (6) is a roll-to-roll-imprinted structure which is imprinted by using heated rolls (2, 3).

2. The household appliance (12) according to claim 1, wherein the treated surface (17, 18) comprises at least one microscale object in form of an indentation, a bottom of the indentation comprising one or more formed nanoscale objects.

3. The household appliance (12) according to any of claims 1 or 2, wherein the treated surface (17, 18) comprises at least one microscale object in form of a protrusion, a top of the protrusion comprising one or more formed nanoscale objects.

4. A method (S1) for treating a surface (17, 18) of a metal fin (14, 16) of a finned-tube heat exchanger (13, 15) of a laundry drying appliance (12) wherein the surface (17, 18) is treated by directly roll-to-roll imprinting a submillimetre-scale structure (6) comprising a nanoscale structure within a microscale structure on the metal surface (17, 18) using heated rolls (2, 3).

5. The method (S1) according to claim 4 wherein the roll-to-roll imprinting is performed using at least one roll (2, 3) having a submillimetre-patterned jacket cover (11).

6. The method (S1) according to any of the claims 4 to 5 wherein the surface (17, 18) is at least one surface (17, 18) of a metal sheet (MS) which is directly mechanically imprinted and then separated (S2).

7. The method (S1, S2) according to any of the claims 4 to 6, wherein the metal is an aluminium alloy and the metal sheet (MS) is separated into fins (14, 16) of the finned-tube heat exchanger (13, 15).

8. The method (S1, S2) according to any of the claims 4 to 7, wherein the temperature applied to or by the rolls (2, 3) is up to 1000 °C.

9. The method (S1, S2) according to any of the claims 4 to 8, wherein the rolls (2, 3) have an additional hard coating.

## Patentansprüche

1. Wäschetrocknungsvorrichtung (12), die mindestens einen Rippenrohr-Wärmetauscher (13, 15) mit mindestens einer Metallrippe (14, 16) aufweist, **dadurch gekennzeichnet, dass** die mindestens eine Rippe (14, 16) eine behandelte Oberfläche (17, 18) hat, die eine direkt mechanisch geformte Struktur im Sub-Millimeterbereich (6) aufweist, wobei die Struktur im Sub-Millimeterbereich (6) eine nanoskalige Struktur innerhalb einer mikroskaligen Struktur aufweist, wobei die Struktur im Sub-Millimeterbereich (6) eine mittels eines Walze-auf-Walze-Verfahrens eingeprägte Struktur ist, die unter Verwendung beheizter Walzen (2, 3) eingeprägt wird.

2. Haushaltsgerät (12) nach Anspruch 1, wobei die behandelte Oberfläche (17, 18) mindestens ein mikroskaliges Objekt in der Form einer Vertiefung aufweist, wobei eine Unterseite der Vertiefung ein oder mehr geformte nanoskalige Objekte aufweist.

3. Haushaltsgerät (12) nach einem der Ansprüche 1 oder 2, wobei die behandelte Oberfläche (17, 18) mindestens ein mikroskaliges Objekt in der Form einer Erhebung aufweist, wobei eine Oberseite der Erhebung ein oder mehr geformte nanoskalige Objekte aufweist.

4. Verfahren (S1) zur Behandlung einer Oberfläche (17, 18) einer Metallrippe (14, 16) eines Rippenrohr-Wärmetauschers (13, 15) einer Wäschetrocknungsvorrichtung (12), wobei die Oberfläche (17, 18) durch direktes Einprägen mittels eines Walze-auf-Walze-Verfahrens einer Struktur im Sub-Millimeterbereich (6) mit einer nanoskaligen Struktur innerhalb einer mikroskaligen Struktur auf der Metalloberfläche (17, 18) unter Verwendung beheizter Walzen (2, 3) behandelt wird.

5. Verfahren (S1) nach Anspruch 4, wobei das Einprägen mittels eines Walze-auf-Walze-Verfahrens unter Verwendung mindestens einer Walze (2, 3) durchgeführt wird, die einen Manteldeckel (11) mit einem Muster im Sub-Millimeterbereich aufweist.

6. Verfahren (S1) nach einem der Ansprüche 4 bis 5, wobei die Oberfläche (17, 18) mindestens eine Oberfläche (17, 18) eines Metallblechs (MS) ist, das direkt mechanisch eingeprägt und dann aufgetrennt wird (S2).

7. Verfahren (S1, S2) nach einem der Ansprüche 4 bis 6, wobei das Metall eine Aluminiumlegierung ist und das Metallblech (MS) in Rippen (14, 16) des Rippenrohr-Wärmetauschers (13, 15) aufgetrennt ist.

8. Verfahren (S1, S2) nach einem der Ansprüche 4 bis 7, wobei die an die oder von den Walzen (2, 3) angelegte Temperatur bis zu 1.000 °C beträgt.

9. Verfahren (S1, S2) nach einem der Ansprüche 4 bis 8, wobei die Walzen (2, 3) eine zusätzliche Hartbeschichtung aufweisen.

## Revendications

1. Appareil de séchage du linge (12) comprenant au moins un échangeur de chaleur à tubes à ailettes (13, 15) avec au moins une ailette métallique (14, 16), **caractérisé en ce que** l'au moins une ailette (14, 16) a une surface traitée (17, 18) qui comprend une structure à l'échelle submillimétrique formée mécaniquement directement (6), la structure à l'échelle submillimétrique (6) comprenant une structure à l'échelle nanométrique au sein d'une structure à l'échelle micrométrique, dans lequel la structure à l'échelle submillimétrique (6) est une structure imprimée rouleau à rouleau qui est imprimée à l'aide de rouleaux chauffés (2, 3).

2. Appareil domestique (12) selon la revendication 1, dans lequel la surface traitée (17, 18) comprend au moins un objet à l'échelle micrométrique sous forme de renfoncement, un fond du renfoncement comprenant un ou plusieurs objets à l'échelle nanométrique formés.

3. Appareil domestique (12) selon l'une quelconque des revendications 1 ou 2, dans lequel la surface traitée (17, 18) comprend au moins un objet à l'échelle nanométrique en forme de saillie, un sommet de la saillie comprenant un ou plusieurs objets à l'échelle nanométrique formés.

4. Procédé (S1) destiné à traiter une surface (17, 18) d'une ailette métallique (14, 16) d'un échangeur de chaleur à tubes à ailettes (13, 15) d'un appareil de séchage du linge (12), dans lequel la surface (17, 18) est traitée en imprimant rouleau à rouleau directement une structure à l'échelle submillimétrique (6) comprenant une structure à l'échelle nanométrique au sein d'une structure micrométrique sur la surface métallique (17, 18) à l'aide de rouleaux chauffés (2, 3).

5. Procédé (S1) selon la revendication 4, dans lequel l'impression rouleau à rouleau est menée à bien à l'aide d'au moins un rouleau (2, 3) ayant un recouvrement de gaine à motifs submillimétriques (11).

6. Procédé (S1) selon l'une quelconque des revendications 4 à 5, dans lequel la surface (17, 18) est au moins une surface (17, 18) d'une feuille métallique (MS) qui est imprimée mécaniquement directement et ensuite séparée (S2).

7. Procédé (S1, S2) selon l'une quelconque des revendications 4 à 6, dans lequel le métal est un alliage d'aluminium et la feuille métallique (MS) est séparée pour former des ailettes (14, 16) de l'échangeur de chaleur à tubes à ailettes (13, 15).

8. Procédé (S1, S2) selon l'une quelconque des revendications 4 à 7, dans lequel la température appliquée sur ou par les rouleaux (2, 3) va jusqu'à 1000 °C.

9. Procédé (S1, S2) selon l'une quelconque des revendications 4 à 8, dans lequel les rouleaux (2, 3) ont un revêtement dur supplémentaire.
